# EUROPEAN PATENT APPLICATION

(11) **EP 4 543 096 A1**
(43) Date of publication of application: **23.04.2025**
(21) Application number: 22946921.8
(22) Date of filing: 17.06.2022
(51) Int. Cl.: H04W 52/02

(54) **NETWORK NODE, BASE STATION, AND COMMUNICATION METHOD**

(71) Applicant: NTT DOCOMO, INC., Tokyo 100-6150 (JP)
(72) Inventor: MINOKUCHI, Atsushi, Tokyo 100-6150 (JP); MUTIKAINEN, Jari, Munich, 80687 (DE); SAMA, Malla Reddy, Munich, 80687 (DE)
(74) Representative: Hoffmann Eitle
(86) International application number: PCT/JP2022/024430
(87) International publication number: WO 2023/243106

(57) **Abstract**

A network node includes: a reception unit configured to receive information indicating traffic characteristics of an XR media stream to be transmitted to a terminal; and a transmission unit configured to transmit, to another network node, information for assisting configuration of a discontinuous reception by a base station based on the information indicating the traffic characteristics.

## Description

### Technical Field

The present invention relates to a network node, a base station, and a communication method in a radio communication system.

### Background Art

In New Radio (NR) (also referred to as "5G"), which is a successor system of long term evolution (LTE), a network architecture including 5GC (5G Core Network) corresponding to EPC (Evolved Packet Core), which is a core network in LTE (Long Term Evolution), and NG-RAN (Next Generation-Radio Access Network) corresponding to E-UTRAN (Evolved Universal Terrestrial Radio Access Network), which is RAN (Radio Access Network) in the LTE network architecture, is under study (for example, Non-Patent Document 1 and Non-Patent Document 2).

In future systems such as 6G, efforts are underway to enhance the efficiency of XR (Extended Reality) media delivery. One of the key areas of study is achieving a balance between Quality of Experience (QoE) during XR reception and power saving in terminals by utilizing Connected Mode Discontinuous Reception (CDRX). Since XR media exhibits specific periodic traffic characteristics, leveraging CDRX to enable periodic discontinuous reception is considered an effective approach.

### Prior Art Document

### Non-Patent Document

Non-Patent Document 1: 3GPP TS 23.501 V17.2.0 (2021-09)
Non-Patent Document 2: 3GPP TS 23.502 V17.2.1 (2021-09)

### SUMMARY OF THE INVENTION

### Problems to be Solved by the Invention

In the conventional technique, there is a problem that the traffic characteristic of the XR media in the radio communication system cannot be specifically associated with the configuration of the discontinuous reception function, and the discontinuous reception function cannot be adapted to the XR media.

The present invention has been made in view of the above problems, and an object of the present invention is to realize a discontinuous reception function suitable for XR media in a radio communication system.

### Means for Solving the Problems

According to the disclosed technology, there is provided a network node including:
a reception unit configured to receive information indicating traffic characteristics of an XR media stream to be transmitted to a terminal; and
a transmission unit configured to transmit, to another network node, information for assisting configuration of a discontinuous reception by a base station based on the information indicating the traffic characteristics.

### Effects of the Invention

According to the disclosed technique, a technique is provided that enables a discontinuous reception function adapted to XR media in a radio communication system to be realized.

### Brief Description of the Drawings

[FIG. 1] FIG. 1 is a diagram for explaining a radio communication system according to an embodiment of the present invention;
[FIG. 2] FIG. 2 is a diagram showing an example of a configuration of a radio communication system according to an embodiment of the present invention;
[FIG. 3] FIG. 3 is a diagram for explaining parameters in discontinuous reception;
[FIG. 4] FIG. 4 is a diagram showing an example of an outline of a processing procedure of a scheme 1 or a scheme 2 according to Example 1 of the embodiment of the present invention;
[FIG. 5] FIG. 5 is a sequence diagram showing an example of a flow of a processing procedure of the scheme 1 according to Example 1 of the embodiment of the present invention;
[FIG. 6] FIG. 6 is a sequence diagram showing an example of a flow of a processing procedure of the scheme 2 according to Example 1 of the embodiment of the present invention;
[FIG. 7] FIG. 7 is a diagram showing an example of an outline of a processing procedure of a scheme 3 or a scheme 6 according to Example 1 of the embodiment of the present invention;
[FIG. 8] FIG. 8 is a sequence diagram showing an example of a flow of a processing procedure of the scheme 3 according to Example 1 of the embodiment of the present invention;
[FIG. 9] FIG. 9 is a diagram showing an example of an outline of a processing procedure of a scheme 4 or a scheme 5 according to Example 1 of the embodiment of the present invention;
[FIG. 10] FIG. 10 is a sequence diagram showing an example of a flow of a processing procedure of the scheme 4 according to Example 1 of the embodiment of the present invention;
[FIG. 11] FIG. 11 is a sequence diagram showing an example of a flow of a processing procedure of the scheme 5 according to Example 1 of the embodiment of the present invention;
[FIG. 12] FIG. 12 is a sequence diagram showing an example of a flow of a processing procedure of the scheme 6 according to Example 1 of the embodiment of the present invention;
[FIG. 13] FIG. 13 is a diagram showing an example of an outline of a processing procedure of a scheme A or a scheme B according to Example 2 of the embodiment of the present invention; [FIG. 14] FIG. 14 is a sequence diagram showing an example of a flow of a processing procedure of the scheme A at the time of terminal registration according to Example 2 of the embodiment of the present invention;
[FIG. 15] FIG. 15 is a first sequence diagram showing an example of a flow of a processing procedure of the scheme A at the time of configuring an XR media stream according to Example 2 of the embodiment of the present invention;
[FIG. 16] FIG. 16 is a second sequence diagram showing an example of the flow of the processing procedure of the scheme A at the time of configuring an XR media stream according to Example 2 of the embodiment of the present invention;
[FIG. 17] FIG. 17 is a sequence diagram showing an example of a flow of a processing procedure of the scheme A at the time of configuration/change for each terminal according to Example 2 of the embodiment of the present invention;
[FIG. 18] FIG. 18 is a sequence diagram showing an example of a flow of a processing procedure of the scheme B at the time of a PDU session establishment procedure according to Example 2 of the embodiment of the present invention; [FIG. 19] FIG. 19 is a first sequence diagram showing an example of a flow of a processing procedure of the scheme B at the time of configuring an XR media stream according to Example 2 of the embodiment of the present invention;
[FIG. 20] FIG. 20 is a second sequence diagram showing an example of the flow of the processing procedure of the scheme B at the time of configuring an XR media stream according to Example 2 of the embodiment of the present invention;
[FIG. 21] FIG. 21 is a sequence diagram showing an example of a flow of a processing procedure of the scheme B at the time of configuration/ change for each flow according to Example 2 of the embodiment of the present invention;
[FIG. 22] FIG. 22 is a diagram showing an example of a functional configuration of a base station according to an embodiment of the present invention;
[FIG. 23] FIG. 23 is a diagram showing an example of a functional configuration of a terminal according to an embodiment of the present invention;
[FIG. 24] FIG. 24 is a diagram showing an example of a hardware configuration of a base station or a terminal according to an embodiment of the present invention;
[FIG. 25] FIG. 25 is a diagram showing an example of the configuration of a vehicle according to an embodiment of the present invention.

### Detailed Description of the Invention

Hereinafter, an embodiment of the present invention will be described with reference to the drawings. The embodiment described below is an example, and the embodiment to which the present invention is applied is not limited to the following embodiment.

In the operation of the radio communication system according to the embodiment of the present invention, existing technology may be used as appropriate. The existing technology is, for example, existing NR or LTE, but is not limited to existing NR or LTE. In addition, the term "LTE" used in the present specification has a broad meaning including LTE-Advanced and schemes (example: NR) subsequent to LTE-Advanced unless otherwise specified.

In addition, in the embodiment of the present invention described below, terms such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH) used in the existing LTE are used. This is for convenience of description, and signals, functions, and the like similar to these may be referred to by other names. The above-mentioned terms in NR correspond to NR-SS, NR-PSS, NR-SSS, NR-PBCH, NR-PRACH and the like. However, even a signal used for NR is not necessarily specified as "NR -".

In the embodiment of the present invention, the duplex scheme may be a time division duplex (TDD) scheme, a frequency division duplex (FDD) scheme, or another scheme (for example, flexible duplex).

In the embodiment of the present invention, a radio parameter or the like being "configured" may mean that a predetermined value is preconfigured or that a radio parameter notified from a base station or a terminal is configured.

### (System Configuration)

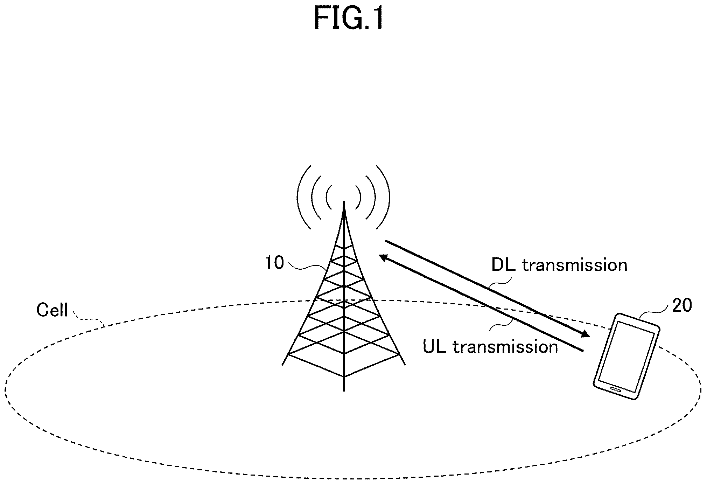

FIG. 1 is a diagram for explaining a radio communication system according to an embodiment of the present invention. As shown in FIG. 1, the radio communication system according to the embodiment of the present invention includes a base station 10 and a terminal 20. Although one base station 10 and one terminal 20 are illustrated in FIG. 1, this is merely an example, and a plurality of base stations 10 and a plurality of terminals 20 may be provided.

The base station 10 is a communication apparatus that provides one or more cells and performs radio communication with the terminal 20. The physical resource of the radio signal is defined in a time domain and a frequency domain, and the time domain is defined by the number of orthogonal frequency division multiplexing (OFDM) symbols. The frequency domain may be defined by the number of subcarriers or the number of resource blocks. In addition, a transmission time interval (TTI) in the time domain may be a slot, or a TTI may be a subframe.

The base station 10 transmits a synchronization signal and system information to the terminal 20. The synchronization signal is, for example, NR-PSS and NR-SSS. The system information is transmitted by, for example, NR-PBCH and is also referred to as broadcast information. The synchronization signal and the system information may be referred to as SSB (SS/PBCH block). As illustrated in FIG. 1, the base station 10 transmits a control signal or data to the terminal 20 in downlink (DL), and receives a control signal or data from the terminal 20 in uplink (UL). Both the base station 10 and the terminal 20 can transmit and receive signals by performing beamforming. In addition, both the base station 10 and the terminal 20 can apply communication by multiple input multiple output (MIMO) in DL or UL. Both the base station 10 and the terminal 20 may perform communication via a secondary cell (SCell) and a primary cell (PCell) by carrier aggregation (CA). Furthermore, the terminal 20 may perform communication via a primary cell of the base station 10 and a primary secondary cell group cell (PSCell: Primary SCG Cell) of another base station 10 by dual connectivity (DC).

The terminal 20 is a communication apparatus having a radio communication function, such as a smartphone, a mobile phone, a tablet, a wearable terminal, and a machine-to-machine (M2M) communication module. As illustrated in FIG. 1, the terminal 20 receives a control signal or data from the base station 10 in DL and transmits a control signal or data to the base station 10 in UL, thereby using various communication services provided by the radio communication system. The terminal 20 receives various reference signals transmitted from the base station 10 and measures the channel quality based on the reception result of the reference signal. The terminal 20 may be referred to as UE, and the base station 10 may be referred to as gNB.

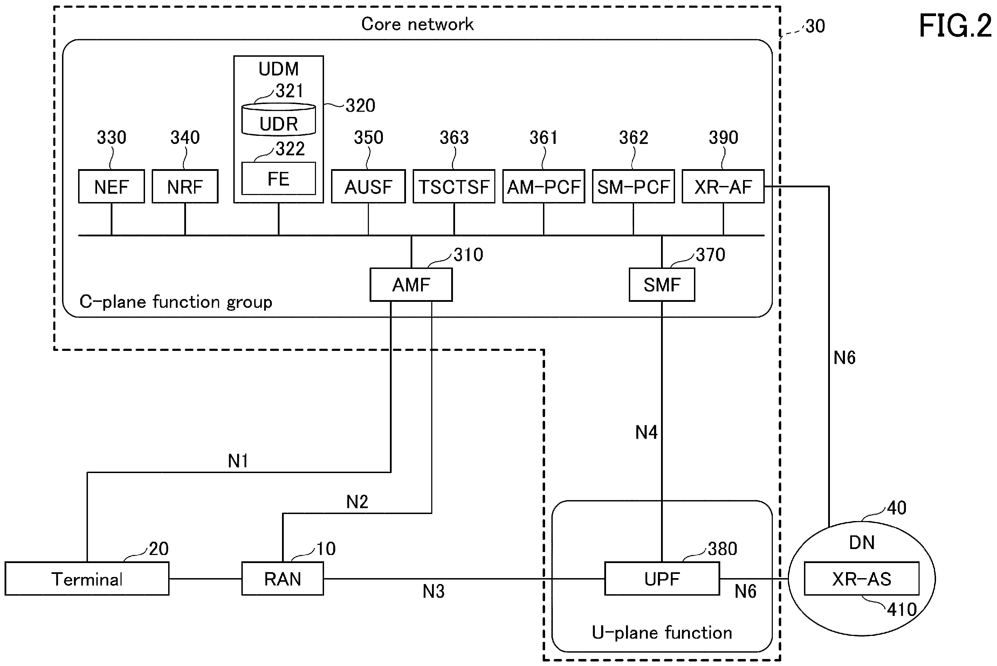

FIG. 2 is a diagram showing an example of a configuration of a radio communication system according to an embodiment of the present invention. The radio communication system includes a RAN 10, the terminal 20, a core network 30, and a data network (DN) 40.

The core network 30 is a network including switches, a subscriber information management apparatus, and the like. The core network 30 includes a network node that realizes a U-Plane function and a network node group that realizes a C-Plane function group.

The U-Plane function is a function of executing a transmission and reception process of user data. The network node that realizes the U-Plane function is, for example, a user plane function (UPF) 380. The UPF 380 is a network node having functions such as a protocol data unit (PDU) session point for interconnection with the DN 40 to the outside, packet routing and forwarding, and quality of service (QoS) handling of the user plane. The UPF 380 controls data transmission and reception between the DN 40 and the terminal 20. The UPF 380 and the DN 40 may be composed of one or more network slices.

The C-Plane function group is a function group that executes a series of control processes for establishing communication and the like. The network node group that realizes the C-Plane functions includes, for example, an access and mobility management function (AMF) 310, a unified data management (UDM) 320, a network exposure function (NEF) 330, a network repository function (NRF) 340, an authentication server function (AUSF) 350, an access and mobility-policy control function (AM-PCF) 361, a session management-policy control function (SM-PCF) 362, a time sensitive communication and time synchronization function (TSCTSF) 363, a session management function (SMF) 370, and an extended reality-application function (XR-AF) 390.

The AMF 310 is a network node having functions such as termination of a RAN interface, termination of a non-access stratum (NAS), registration management, connection management, reachability management, and mobility management. The NRF 340 is a network node having a capability of discovering a network function (NF) instance that provides a service. The UDM 320 is a network node that manages subscriber data and authentication data. The UDM 320 includes a user data repository (UDR) 321 storing the data and a front end (FE) 322. The FE 322 processes subscriber information.

The SMF 370 is a network node having functions such as session management, IP address assignment and management of the terminal 20, DHCP (Dynamic Host Configuration Protocol) functions, ARP (Address Resolution Protocol) proxy, roaming functions, and the like. The NEF 330 is a network node having a capability of notifying other network functions (NFs) of capabilities and events.

The AM-PCF 361 is a network node with functions for policy control related to network operations such as information notification to the RAN, registration management, connection management, reachability management, and mobility management. The SM-PCF 362 is a network node with functions for policy control related to session management, IP address assignment and management for terminal 20, DHCP functionality, ARP proxy, roaming functionality, and other associated network operations.

The TSCTSF 363 is a network node having a function of associating a time synchronization service request from the NF with the AF session using the PCF (session with the AM-PCF 361, the SM-PCF 362, or the like).

The XR-AF 390 is a network node with the function of controlling application servers that manage the delivery of XR media streams.

The DN 40 includes an XR-AS (Extended Reality-Application Server) 410. The XR-AS 410 is a server device that distributes an XR media stream.

The AMF 310 and the RAN 10 are communicably connected as an N2 link. Further, the UPF 380 and the RAN 10 are communicably connected as an N3 link. The UPF 380 and the SMF 370 are communicably connected as an N4 link. The UPF 380 and the DN 40 or the XR-AF 390 and the DN 40 are connected to be communicable as an N6 link.

### (Conventional Discontinuous Reception Function)

Next, a conventional discontinuous reception function will be described.

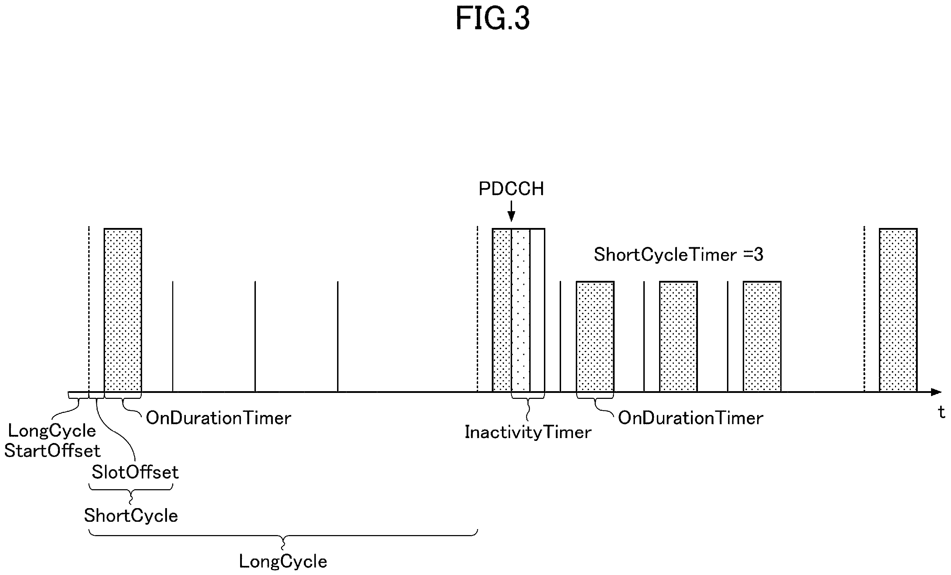

FIG. 3 is a diagram for explaining parameters in the discontinuous reception. CDRX is configured by a plurality of parameters shown below.
LongCycle: DRX long cycle
ShortCycle: DRX short cycle
OnDurationTimer: DRX receivable time
SlotOffset: Delay before starting DRX receivable time
InactivityTimer: DRX InactivityTimer (a period during which the terminal 20 performs transmission and reception after a PDCCH reception occasion)
LongCycleStartOffset: delay before starting DRX long cycle
ShortCycleTimer: the number of times of DRX short cycles (the number of times of DRX short cycles included in the DRX long cycle)

In addition, in the conventional discontinuous reception function, terminal CDRX assistance information (UEAssistanceInformation) is defined. The terminal CDRX assistance information is information transmitted to the RAN 10 by the terminal 20. The RAN 10 may determine the setting value (each parameter described above) of the CDRX based on the terminal CDRX assistance information.

The terminal CDRX assistance information includes an information element "UEAssistanceInformation". The information element "UEAssistanceInformation" includes an information element "drx-Preference".

The information element "drx-Preference" further includes preferredDRX-InactivityTimer, preferredDRX-LongCycle, preferredDRX-ShortCycle, and preferredDRX-ShortCycleTimer.

The RAN 10 transmits RRCReconfiguration to the terminal 20. The message includes, for example, an information element "masterCellGroup". The information element "masterCellGroup" includes an information element "CellGroupConfig". The information element "CellGroupConfig" includes an information element "mac-CellGroupConfig". The information element "mac-CellGroupConfig" includes an information element "drx-Config".

The information element "drx-Config" includes drx-onDurationTimer, drx-InactivityTimer, drx-HARQ-RTT-TimerDL, drx-HARQ-RTT-TimerUL, drx-RetransmissionTimerDL, drx-RetransmissionTimerUL, drx-LongCycleStartOffset, drx-ShortCycle, drx-ShortCycleTimer, and drx-SlotOffset.

### (Problem 1 of Related Art)

In the conventional technique, there is a problem that the traffic characteristic of the XR media in the radio communication system cannot be specifically associated with the configuration of the discontinuous reception function, and the discontinuous reception function cannot be adapted to the XR media.

In the case of XR media which is important and requires low delay, such as remote medical care, it may be effective to suppress radio resources by using semi-persistent scheduling (SPS) for downlink. However, conventionally, the traffic characteristics of the XR media cannot be specifically associated with the configuration of the SPS, and the SPS cannot be adapted to the XR media.

### (Problem 2 of Related Art)

In addition, conventionally, it is implicitly assumed that a user of a radio communication network is satisfied with the traffic characteristics by the exchange of the application layer. However, (i) the user may request to suppress the traffic volume in general by notification by the NAS or configuration of subscriber information in consideration of power saving or the like. (ii) The terminal 20 may transmit the terminal CDRX assistance information to the network due to battery state deterioration. In addition, (iii) the terminal may transmit the terminal CDRX assistance information to the network because the user has set the terminal to improve the battery life.

In these cases, the XR media transmitted by XR-AS 410 (a) is discarded by the RAN 10 and does not reach the terminal 20, or (b) is sent to the terminal 20, reducing the effect of CDRX. Therefore, communication resources are wasted, or a result against the intention of the user or the terminal is obtained. For example, it is conceivable that 5GS (core network 30) transmits a notification to XR-AF 390/XR-AS 410 such that the XR-AS 410 does not transmit unnecessary data, but it is not realized.

### (Outline of Present Embodiment)

In the present embodiment, Example 1 and Example 2 will be described as specific examples for solving the above-described conventional problem. Example 1 addresses the above-described conventional problem 1. Example 2 addresses the above-described conventional problem 2.

### (Example 1)

In this Example 1, schemes (scheme 1 to scheme 3) using XR-AM assistance information and schemes (scheme 4 to scheme 6) using XR-SM assistance information will be described as an overall framework for reflecting the characteristics of an XR media stream in 5GS.

### (Outline of Processing Procedure of Scheme 1 or Scheme 2)

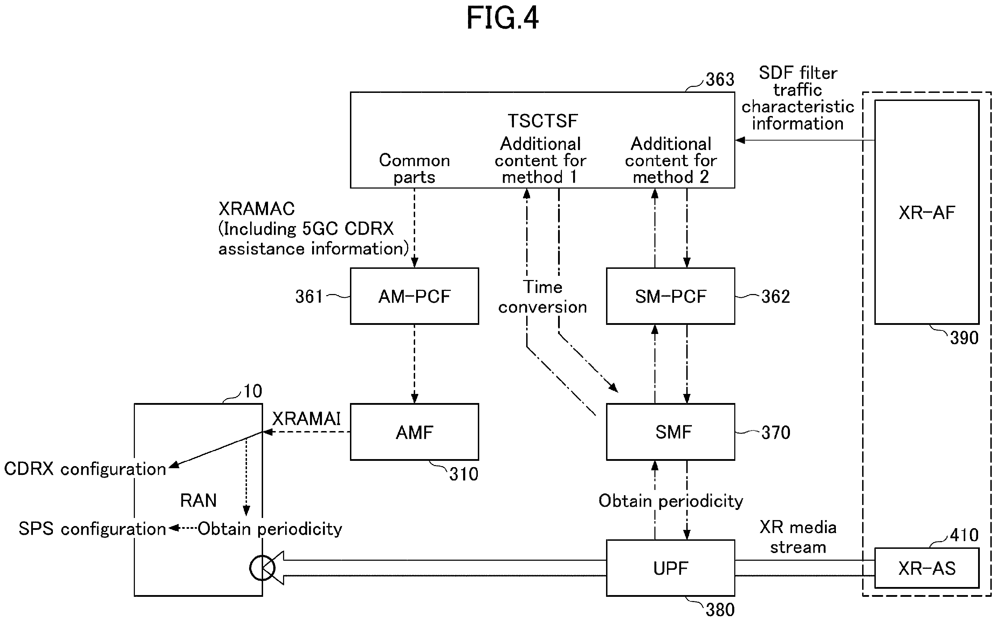

FIG. 4 is a diagram illustrating an example of an overview of a processing procedure of the scheme 1 or the scheme 2 according to Example 1 of the embodiment of the present invention. Common to the schemes 1 to 3, the core network 30 converts the traffic characteristic information of the plurality of XR media streams transmitted from the XR-AF into 5GC-CDRX assistance information in the XRAMAC (XR-AM assistance container) and the XRAMAI (XR-AM assistance information) so that the RAN 10 can use the traffic characteristic information for calculating the parameters of the CDRX (applied to each terminal), and notifies the RAN 10 of the 5GC-CDRX assistance information.

The 5GC-CDRX assistance information is an example of information for assisting the discontinuous reception configuration by the RAN 10. The 5GC-CDRX assistance information in each scheme will be described in detail later.

Note that the RAN 10 may receive both the conventional terminal-CDRX assistance information and the 5GC-CDRX assistance information described above. In the following, to simplify the scenario, an example in which the RAN 10 receives only the latter will be described.

### (Flow of Processing Procedure of scheme 1)

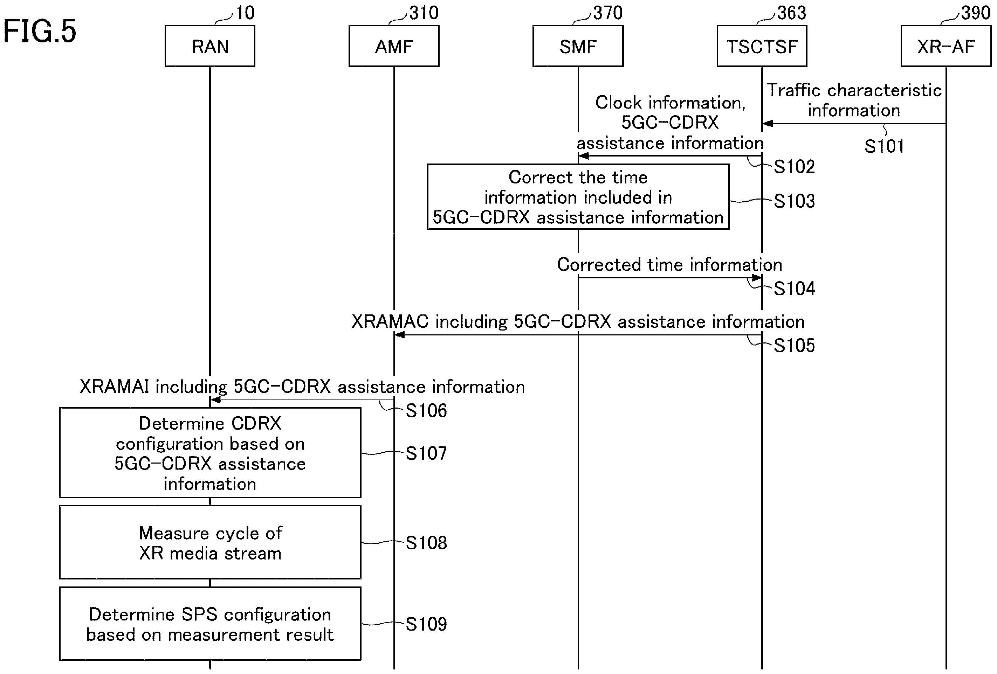

FIG. 5 is a sequence diagram illustrating an example of a flow of a processing procedure of the scheme 1 according to Example 1 of the present embodiment. Scheme 1 may be used, for example, when the traffic characteristic information includes sufficient information to derive the 5GC-CDRX assistance information.

The XR-AF 390 transmits the traffic characteristic information for each XR media stream to the TSCTSF 363 (step S101). The TSCTSF 363 converts this information into 5GC-CDRX assistance information in a format understandable by the RAN 10. Then, the TSCTSF 363 transmits the clock information relied on by the XR-AF 390 and the 5GC-CDRX assistance information to the SMF 370 (step S102). Here, the clock information refers to data indicating the clock.

The SMF 370 compares time information indicated by the clock information with time information of 5G clock, and corrects the time information included in the 5GC-CDRX assistance information (step S103). The time information is information in the time direction such as time and synchronization included in the 5GC-CDRX assistance information.

The SMF 370 transmits the corrected time information to the TSCTSF 363 (step S104).

The TSCTSF 363 transmits XRAMAC including the 5GC-CDRX assistance information including the corrected time information to the AMF 310 via the AM-PCF 361 (step S105). The AMF 310 transmits the XRAMAI including the 5GC-CDRX assistance information to the RAN 10 (step S106).

The RAN 10 determines the CDRX configuration based on the 5GC-CDRX assistance information included in the XRAMAI (step S107). Further, the RAN 10 recognizes reception of the XR media stream by the presence of the XRAMAI, and measures the cycle of the XR media stream (step S108). Then, the RAN 10 determines the SPS configuration based on the measurement result (step S109).

### (Flow of Processing Procedure of Scheme 2)

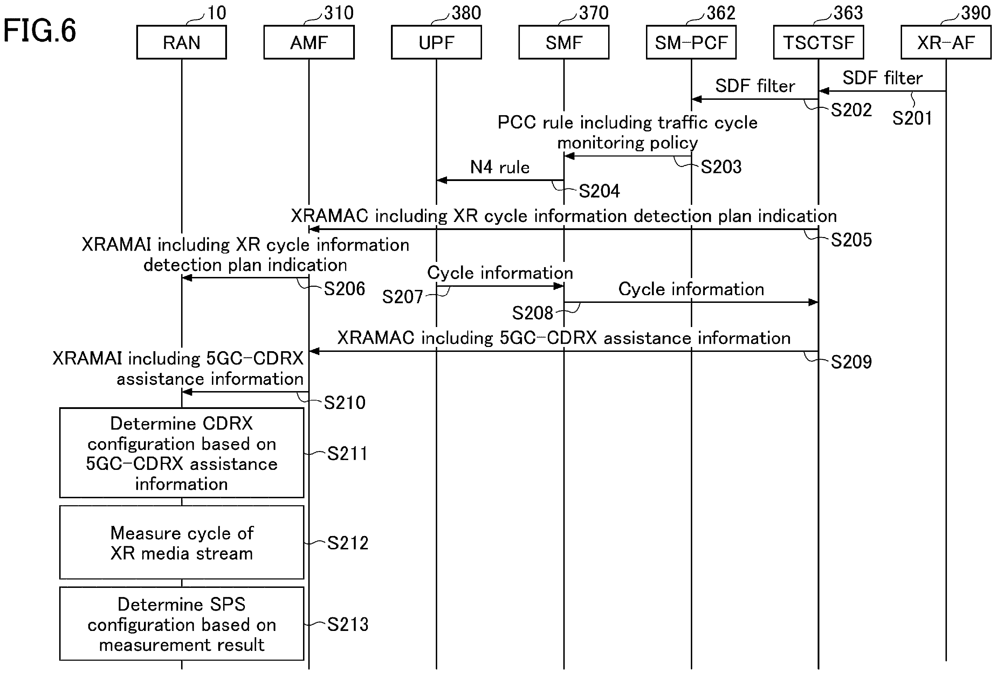

FIG. 6 is a sequence diagram illustrating an example of a flow of a processing procedure of the scheme 2 according to Example 1 of the present embodiment. Scheme 2 may be used, for example, when the traffic characteristic information does not include sufficient information to derive the 5GC-CDRX assistance information.

The XR-AF 390 transmits an SDF (Service Data Flow) filter for each XR media stream to the TSCTSF 363 (step S201). The TSCTSF 363 then forwards the SDF filter to the SM-PCF 362 (step S202).

The SM-PCF 362 generates a PCC rule that includes a traffic periodicity monitoring policy based on the SDF filter and transmits the generated PCC rule to the SMF 370 (step S203). The SMF 370 generates an N4 rule based on the PCC rule and transmits the generated N4 rule to the UPF 380 (Step S204).

On the other hand, the TSCTSF 363 generates an XRAMAC including the XR cycle information detection plan indication. The TSCTSF 363 transmits the XRAMAC including the XR cycle information detection plan indication to the AMF 310 via the AM-PCF 361 (step S205). The AMF 310 transmits an XRAMAI including the XR cycle information detection plan indication to the RAN 10 (step S206).

When the UPF 380 detects the cycle information, the UPF 380 reports the cycle information to the SMF 370 (step S207). The SMF 370 notifies the TSCTSF 363 of the cycle information via the SM-PCF 362 (step S208).

The TSCTSF 363 converts the cycle information into 5GC-CDRX assistance information in a format understandable by the RAN 10. Then, the TSCTSF 363 transmits the XRAMAC including the 5GC-CDRX assistance information to the AMF 310 via the AM-PCF 361 (step S209). The AMF 310 transmits an XRAMAI including the 5GC-CDRX assistance information to the RAN 10 (step S210).

The RAN 10 may not measure the cycle of the XR media stream for CDRX configuration in consideration of the XR cycle information detection plan indication included in the XRAMAI. The RAN 10 considers the 5GC-CDRX assistance information in the XRAMAI and determines CDRX configuration (step S211). The RAN 10 may recognize XR media stream reception by the existence of the XRAMAI, measure the cycle of the XR media stream (step S212), and determine the SPS configuration based on the measurement result (step S213).

### (Outline of Processing Procedure of Scheme 3 or Scheme 6)

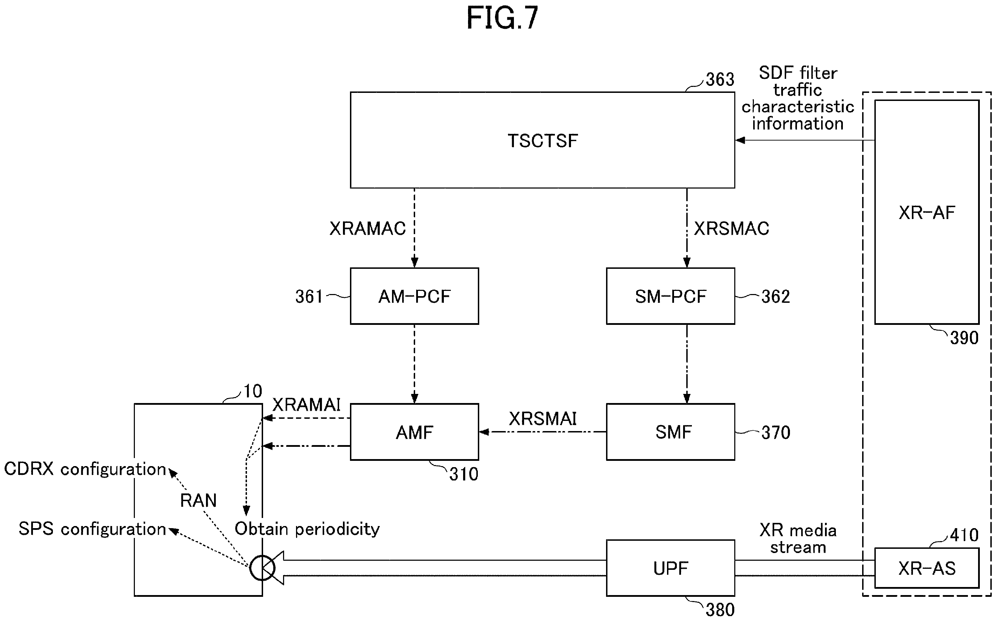

FIG. 7 is a diagram illustrating an example of an overview of a processing procedure of the scheme 3 or the scheme 6 according to Example 1 of the embodiment of the present invention. The scheme 3 or the scheme 6 is used, for example, when the traffic characteristic information does not include information indicating a cycle but includes information indicating that there is a periodicity. The core network 30 notifies the RAN 10 of information indicating that the XR media stream is to be transmitted. The RAN 10 measures the cycle by itself.

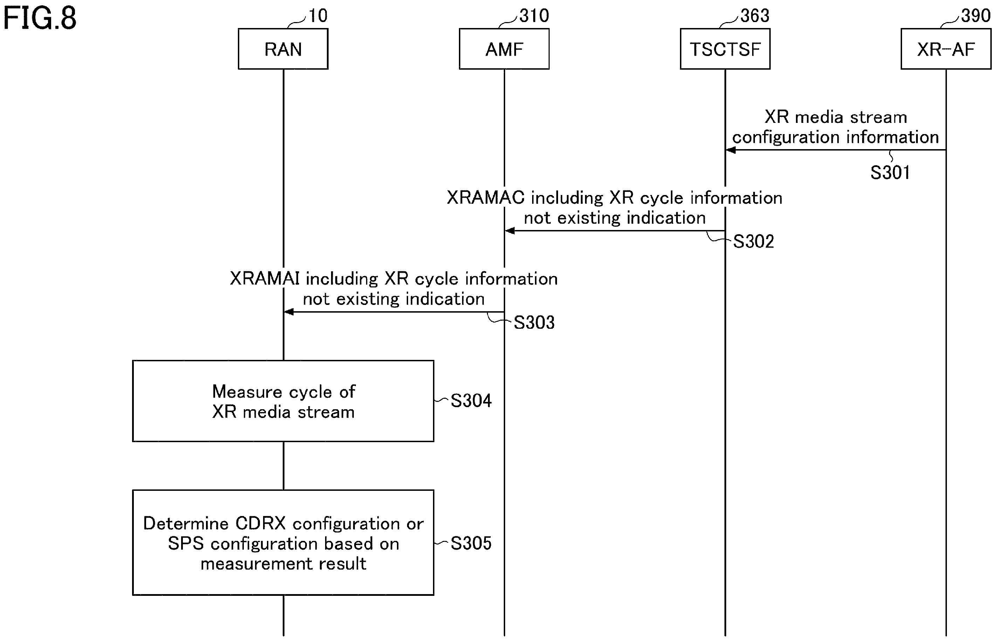

FIG. 8 is a sequence diagram illustrating an example of a flow of a processing procedure of the scheme 3 according to Example 1 of the embodiment of the present invention. The XR-AF 390 transmits information for configuring the XR media stream to the TSCTSF 363 (Step S301). If no future detection of cycle is planned, the TSCTSF 363 generates an XRMAC that includes an XR cycle information not existing indication. The TSCTSF 363 transmits this XRMAC, including the XR cycle information not existing indication to the AMF 310 via the AM-PCF 361 (step S302). The AMF 310 then transmits an XRMAI, including the XR cycle information not existing indication, to the RAN 10 (step S303).

The RAN 10 may perform measurement of the XR media stream cycle for CDRX configuration or SPS configuration in consideration of the XR cycle information not existing indication in the XRAMAI (step S304). The RAN 10 determines the CDRX configuration or the SPS configuration based on the measurement result (step S305).

### (5GC-CDRX Assistance Information related to Scheme 1)

The 5GC-CDRX assistance information may include information equivalent to the conventional terminal CDRX assistance information. To be more specific, when there is one XR media stream, the core network 30 (TSCTSF 363) converts information as follows. The following shows the relationship between the XR AF 390 providing information for each XR media stream (left side) of the conversion source and the 5GC-CDRX assistance information (right side) after the conversion.
- A time adjusted earlier by an expected jitter from a scheduled transmission time of the first I-frame ⇒ BAT (Burst Arrival Time)
- A transmission cycle of I-frames ⇒ Desired DRX Long Cycle
- An interval between transmission of an I-frame and a subsequent transmission of B/P frame ⇒ Desired DRX Short Cycle
- The number of B/P frames transmitted after one I-frame ⇒ Desired DRX Short Cycle Count
- Data size of an I-frame ⇒ Main Burst Maximum Value
- Data size of an I-frame divided by the data transmission rate ⇒ Desired DRX Inactivity Timer
- Jitter * 2 ⇒ Desired DRX Receivable Time

The above-described conversion method utilizes the fact that the relationship between the I-frame transmission cycle in the XR media stream and the transmission of the B-frame or the P-frame after the I-frame transmission can correspond to the relationship between the long cycle and the short cycle in DRX.

Note that both the main burst maximum value and the desired DRX inactivity timer are used by the RAN 10 to derive the DRX inactivity timer value. Also, only one of the main burst maximum value and the desired DRX inactivity timer may be used to derive the inactivity timer value.

The core network 30 (TSCTSF 363) may take into account the difference in the transmission timing between PDCCH and PDSCH when deriving the desired DRX inactivity timer.

When there are a plurality of XR media streams (hereinafter, referred to as Y and Z), the core network 30 (TSCTSF 363) converts information as follows.

When the desired DRX long cycles match (that is, LC common = LCy = LCz) and the difference in BAT is an integer multiple of the desired DRX long cycle, the following conversions are applied:
- Desired DRX Short Cycle (=SCcommon)
   Based on the definitions of the DRX long cycle and DRX short cycle, assuming that Iy and Iz are integers, each of SCy * Iy = LCcommon and SCz * Iz = LCcommon holds true. Assuming that the least common multiple (LCM) of Iy and Iz is LCM(Iy, Iz), SCcommon = LCcommon/LCM(Iy, Iz) holds true.
- Desired DRX Short Cycle Count (=SCTcommon)

Assuming that the DRX short cycle counts for Y and Z are SCTy and SCTz, respectively, SCT common = max(SCy * SCTy/SCcommon, SCz × SCTz/SCcommon)
- Main Burst Maximum Value

The sum of the main burst maximum values for Y and Z.
- Desired DRX Inactivity Timer

The sum of the DRX inactivity timers for Y and Z. (If changes in the data transmission rate are considered, the desired DRX inactivity timer value may also change.)
- Desired DRX Reception Window Time

The larger of the DRX reception window times for Y and Z.

Note that, when the relationship between the desired DRX long cycle and the BAT is other than the above, the relationship may be implementation dependent.

### (5GC-CDRX Assistance Information related to Scheme 2)

In the case of the scheme 2, specifically, when there is one XR media stream, the core network 30 converts information as follows.

The following terms are used herein.
- Maximum frame: A set of a plurality of packets of the MTU size and the immediately following packet of less than the MTU size when the maximum number of packets of the MTU size are continuously detected.
- Frame: Not the maximum frame. A set of one or more packets of the MTU size and the immediately following packet of the MTU size or less when one or more packets of the MTU size are continuously detected. If there is no packet of the MTU size, one packet less than the MTU size.

The following shows the relationship between the XR AF 390 providing information for each XR media stream (left side) of the conversion source and the 5GC-CDRX assistance information (right side) after the conversion.
- Reception start time of one maximum frame: BAT
- Reception cycle of maximum frame: desired DRX long cycle
- Interval between maximum frame reception and immediately subsequent frame reception: desired DRX short cycle
- Number of frames received after one maximum frame: Desired DRX short cycle count
- Data size of maximum frame: maximum value of main burst
- Maximum frame data size divided by data transmission rate: desired DRX inactivity timer
- Fluctuation of maximum frame reception cycle * 2: desired DRX receivable time

Note that both the main burst maximum value and the desired DRX inactivity timer are used by the RAN 10 to derive the DRX inactivity timer value. Also, only one of the main burst maximum value and the desired DRX inactivity timer may be used to derive the inactivity timer value.

The core network 30 (TSCTSF 363) may take into account the difference in the transmission timing between PDCCH and PDSCH when deriving the desired DRX deactivation timer.

When there are a plurality of XR media streams (hereinafter, referred to as Y and Z), the core network 30 (TSCTSF 363) converts information as follows.

When the UPF 380 recognizes in advance that there are a plurality of XR media streams by the SDF filter, the UPF 380 detects each XR media stream and reports it to the TSCTSF 363. Based on the multiple sets of reports, the TSCTSF 363 first derives 5GC-CDRX assistance information for each set as described above. Then, the TSCTSF 363 derives 5GC-CDRX assistance information integrating multiple sets as in Scheme 1.

On the other hand, when the UPF 380 does not recognize in advance that there are a plurality of XR media streams, when the UPF 380 can detect a long cycle and a short cycle of traffic, for example, when the reception cycle of the maximum frame is constant, the UPF 380 detects the traffic as one XR media stream and reports the XR media stream to the TSCTSF 363. The TSCTSF 363 derives 5GC-CDRX assistance information as described above from a set of reports.

When the UPF 380 cannot detect the long cycle and the short cycle of the traffic, the UPF 380 reports the fact that the long cycle and the short cycle cannot be detected to the TSCTSF 363. (Alternatively, the UPF380 may report nothing.)

### (Outline of Processing Procedure of Scheme 4 or Scheme 5)

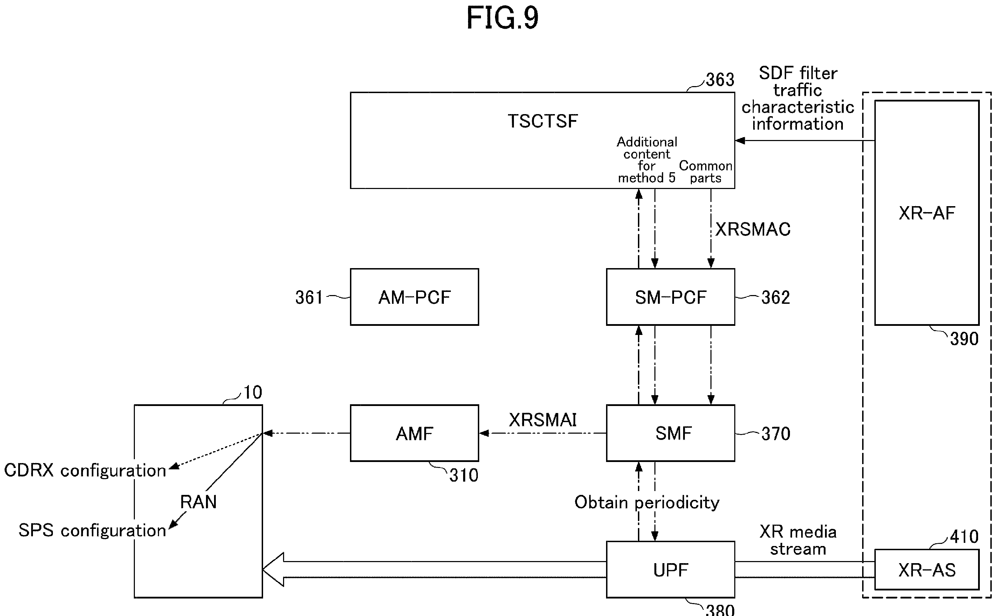

FIG. 9 is a diagram illustrating an example of an outline of a processing procedure of the scheme 4 or the scheme 5 according to Example 1 of the embodiment of the present invention. The core network 30 converts the traffic characteristic information of multiple XR media streams provided by the XR-AF 390 into 5GC cycle transmission/CDRX assistance information within the XRSMAC (XR-SM Assistance Container) and XRSMAI (XR-SM Assistance Information) such that the RAN 10 can use it for calculating SPS parameters and CDRX parameters (applied per terminal) and then notifies the RAN 10 accordingly.

Since the definition of the cycle is different between SPS/CG (Configured Grant) and CDRX, the cycle information of the latter cannot be derived even if the cycle information of the former is bundled. Therefore, here, information for each stream is carried around, but "CDRX" is used as the name.

### (Flow of Processing Procedure of Scheme 4)

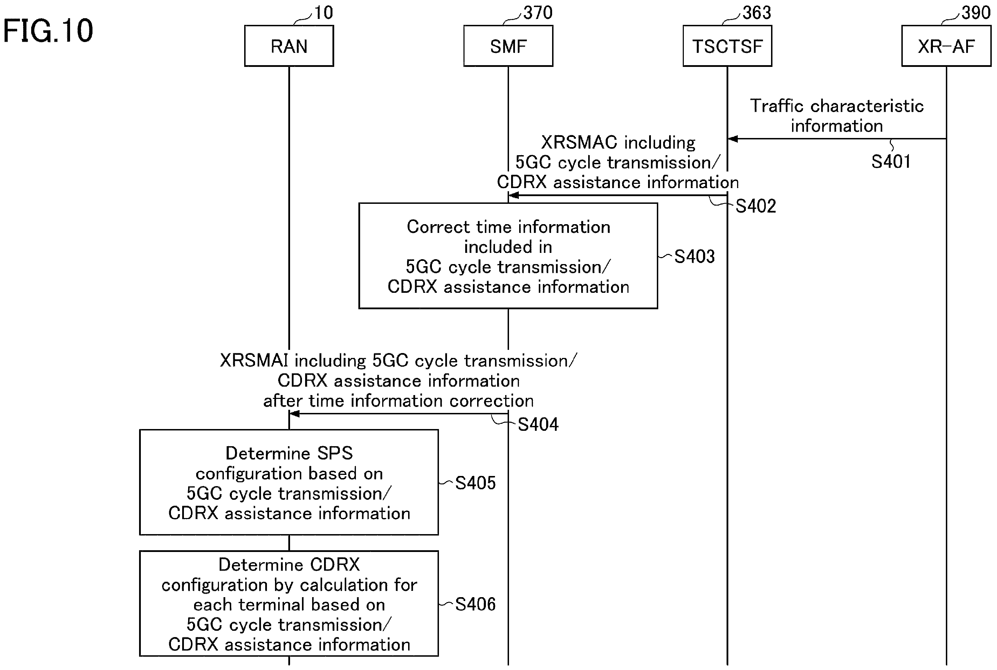

FIG. 10 is a sequence diagram illustrating an example of a flow of a processing procedure of the scheme 4 according to Example 1 of the embodiment of the present invention. The XR-AF 390 transmits the traffic characteristic information of each XR media stream to the TSCTSF 363 (step S401).

The TSCTSF 363 converts the traffic characteristic information into 5GC cycle transmission/CDRX assistance information in a format that the RAN 10 can understand. Then, the TSCTSF 363 transmits an XRSMAC including 5GC cycle transmission/CDRX assistance information to the SMF 370 via the SM-PCF 363 (step S402).

The SMF 370 corrects the time information included in the 5GC cycle transmission/CDRX assistance information (step S403). The SMF 370 transmits the XRSMAI including the 5GC cycle transmission/CDRX assistance information after the time information is corrected to the RAN 10 (step S404).

The RAN 10 determines the SPS configuration based on the 5GC cycle transmission/CDRX assistance information included in the XRSMAI (step S405). The RAN 10 determines the CDRX configuration by terminal-specific calculation based on the 5GC cycle transmission/CDRX assistance information (step S406).

### (Flow of Processing Procedure of Scheme 5)

The core network 30 converts the traffic characteristic information of multiple XR media streams detected by the UPF 380 into 5GC cycle transmission/CDRX assistance information included in the XRSMAC (XR-SM Assistance Container) and the XRSMAI (XR-SM Assistance Information) such that the RAN 10 can utilize it for calculating SPS parameters and CDRX parameters (applied per terminal) and then notifies the RAN 10 accordingly.

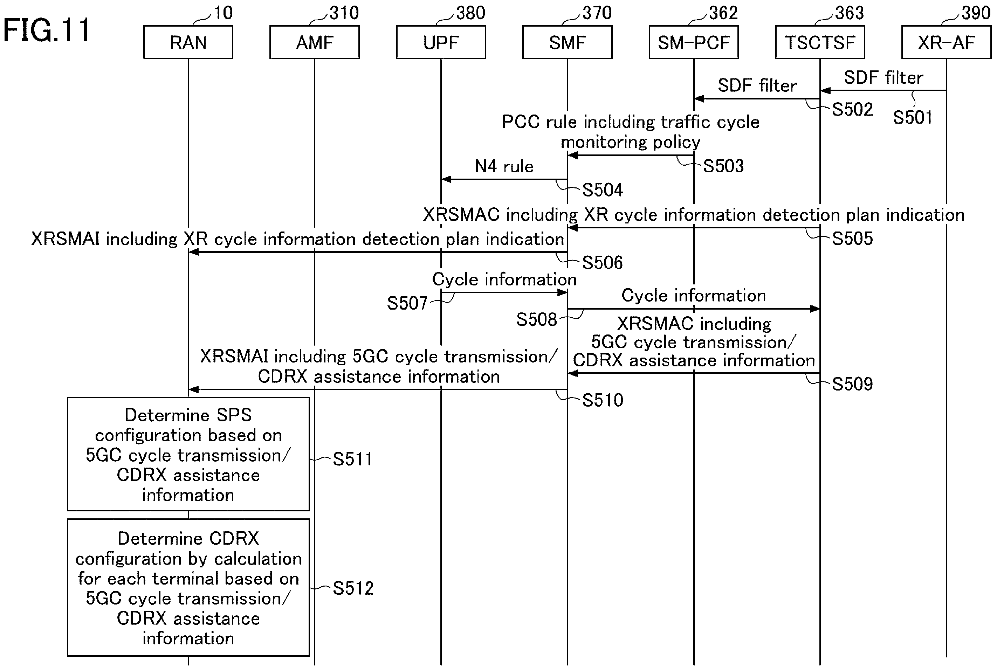

FIG. 11 is a sequence diagram illustrating an example of a flow of a processing procedure of the scheme 5 according to Example 1 of the embodiment of the present invention. The flow of the process from step S501 to step S508 is the same as that from step S201 to step S208 of the scheme 2 shown in FIG. 6.

Following step S508, the TSCTSF 363 converts the cycle information into 5GC cycle transmission/CDRX support information in a format that the RAN 10 can understand. Then, the TSCTSF 363 sends the XRSMAC, which includes the 5GC cycle transmission/CDRX assistance information, to the SMF 370 via the SM-PCF 362 (Step S509). The SMF 370 forwards the XRSMAI, which contains the 5GC cycle transmission/CDRX assistance information, to the RAN 10 (Step S510).

The RAN 10 may not perform measurement of the XR media stream cycle in consideration of the XR cycle information detection plan indication included in the XRSMAI.

The RAN 10 determines the SPS configuration based on the 5GC cycle transmission/CDRX assistance information included in the XRSMAI (step S511). The RAN 10 determines the CDRX configuration by terminal-specific calculation based on the 5GC cycle transmission/CDRX assistance information (step S512).

### (Flow of Processing Procedure of Scheme 6)

The core network 30 notifies the RAN 10 of information indicating that the XR stream information is to be transmitted. The RAN 10 detects cycle information by itself.

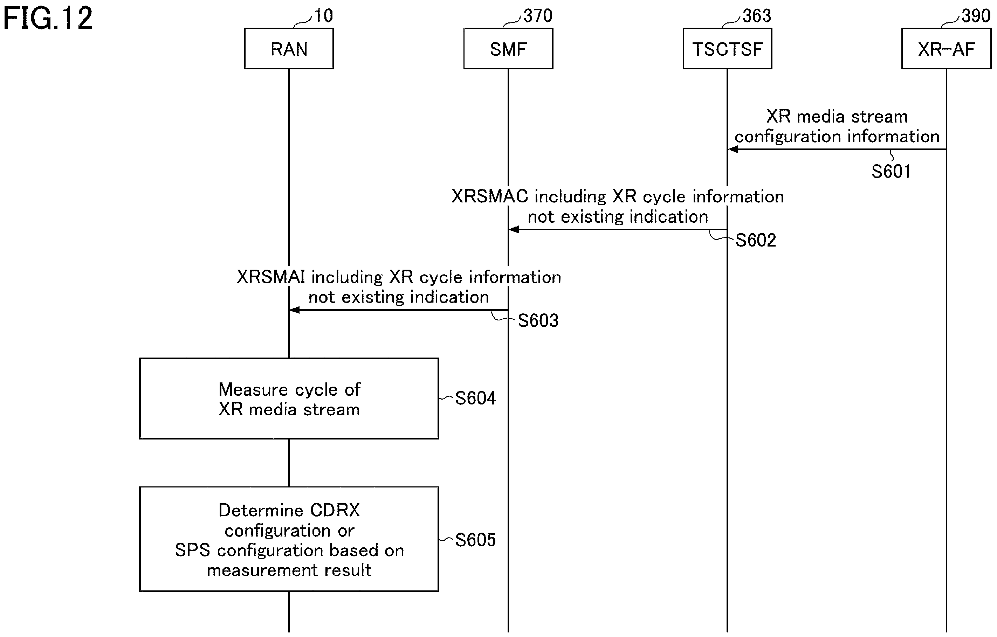

FIG. 12 is a sequence diagram illustrating an example of a flow of a processing procedure of the scheme 6 according to Example 1 of the embodiment of the present invention. The XR-AF 390 sends information to the TSCTSF 363 to configure the XR media stream (step S601).

When the TSCTSF 363 does not plan to detect the cycle information from now on, the TSCTSF 363 generates an XRSMAC including the XR cycle information not existing indication. The TSCTSF 363 transmits the XRSMAC including the XR cycle information not existing indication to the SMF 370 via the SM-PCF 362 (step S602). The SMF 370 transmits an XRSMAI to the RAN 10 containing the XR cycle information not existing indication (step S603).

Subsequently, the RAN 10 measures the cycle of the XR media stream in consideration of the XR cycle information not existing indication in the XRSMAI (step S604). The RAN 10 determines a CDRX configuration or an SPS configuration based on the measurement result (step S605).

### (5GC cycle transmission/CDRX assistance information according to schemes 4-6)

In the case of the scheme 4, the 5GC cycle transmission/CDRX assistance information may include information equivalent to the conventional TSCAI information and information equivalent to information obtained by measuring the conventional CDRX assistance information for each stream or each terminal. A concrete example is the same as the 5GC-CDRX assistance information according to the scheme 1.

In the case of the scheme 5, the 5GC cycle transmission/CDRX assistance information may include information equivalent to the conventional TSCAI information and information equivalent to information obtained by measuring the conventional terminal CDRX assistance information for each stream or each terminal. A concrete example is the same as the 5GC-CDRX assistance information according to the scheme 2.

According to the present Example, CDRX configuration or SPS configuration according to the characteristics of the XR media stream may be implemented by any one of the schemes (Scheme 1 to Scheme 3) using the XR-AM assistance information and the schemes (Scheme 4 to Scheme 6) using the XR-SM assistance information.

### (Example 2)

In the present Example, mechanisms by which the 5GS (Core Network 30) notifies the XR-AF 390/XR-AS 410 to prevent the XR-AS 410 from sending unnecessary data will be explained for two schemes: one using the AMF 310 (Scheme A) and the other using the SMF 370 (Scheme B).

### (Outline of Processing Procedure of Scheme A or Scheme B)

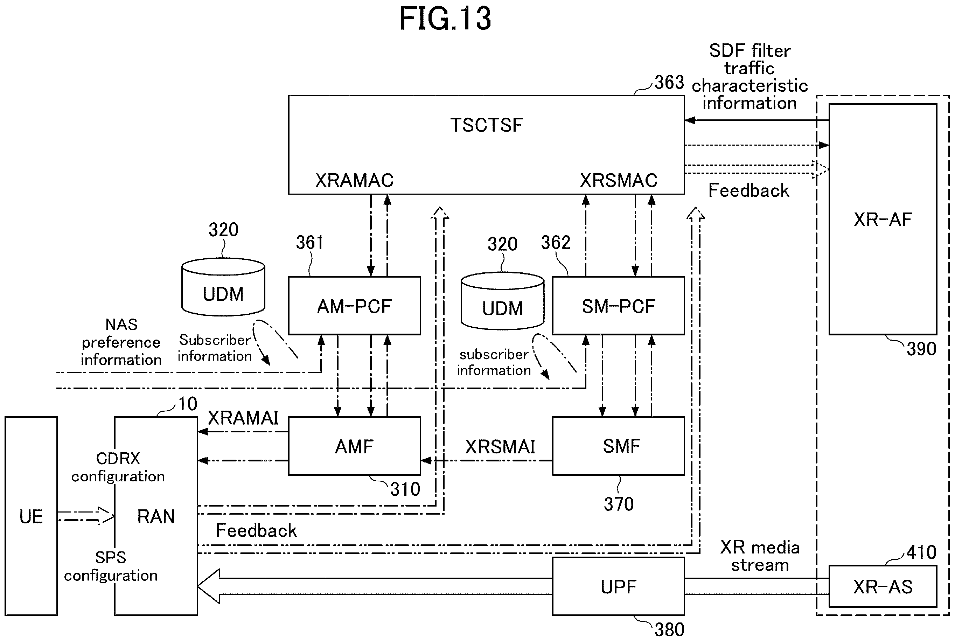

FIG. 13 is a diagram illustrating an example of an outline of a processing procedure of the scheme A or the scheme B according to Example 2 of the embodiment of the present invention.

### (Flow of Processing Procedure of Scheme A)

As a premise of the scheme A, it is assumed that a power saving request is introduced into an information element included in a registration request and an information element included in AM subscriber information in a conventional terminal registration procedure.

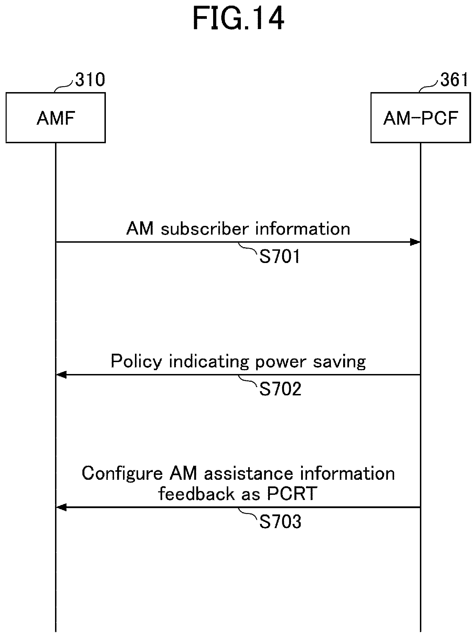

FIG. 14 is a sequence diagram illustrating an example of a flow of a processing procedure of the scheme A at the time of terminal registration according to Example 2 of the embodiment of the present invention. The AMF 310 notifies the AM-PCF 361 of the AM subscriber information (step S701). The AM-PCF 361 notifies the AMF 310 of the policy indicating power saving (step S702). In addition, the AM-PCF 361 configures the AM assistance information feedback as a Policy Control Request Trigger (PCRT) in the AMF 310 (step S703).

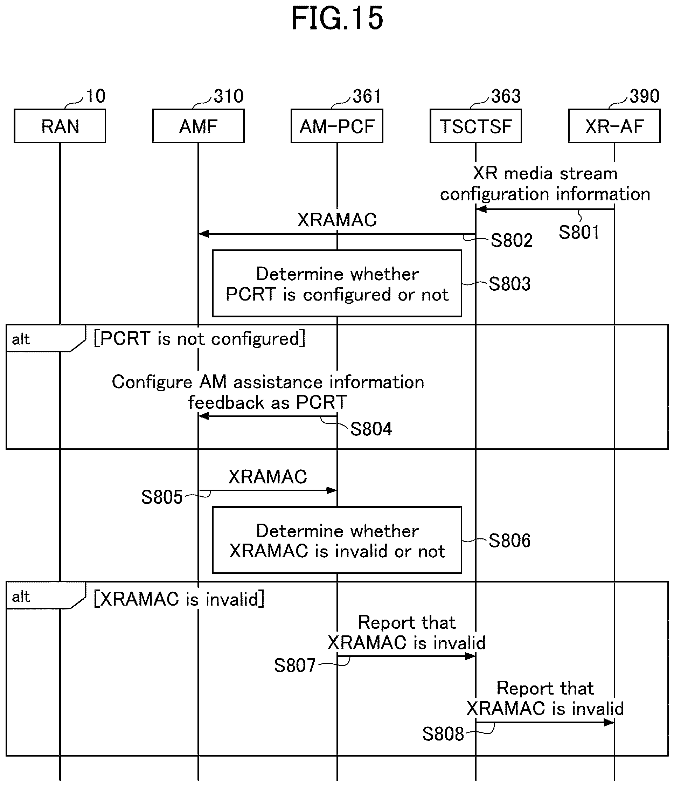

FIG. 15 is a first sequence diagram illustrating an example of a flow of a processing procedure of the scheme A at the time of configuring the XR media stream according to Example 2 of the embodiment of the present invention. The XR-AF 390 transmits information indicating the configuration of the XR media stream (step S801). TSCTSF 363 transmits the XRAMAC to the AMF 310 (step S802).

The AM-PCF 361 determines whether or not the PCRT is configured (step S803). When the AM-PCF 361 determines that the PCRT is not configured, the the AM-PCF 361 configures the AMF 310 with AM assistance information feedback as the PCRT (step S804).

The AMF 310 determines that the XRAMAC is one of the AM assistance information, and reports the XRAMAC to the AM-PCF 361 according to the PCRT (step S805).

Since the XRAMAC is a container that is transparent to the AM-PCF 361, the AMF 310 needs to notify the AM-PCF 361 of the contents as necessary. Therefore, the processing of step S805 is required.

Subsequently, the AM-PCF 361 determines whether the XRAMAC is invalid (step S806). Then, when the AM-PCF 361 determines that the XRAMAC is invalid, the AM-PCF 361 notifies that the XRAMAC is invalid to the TSCTSF 363 (step S807). Then, the TSCTSF 363 notifies the XR-AF 390 that the XRAMAC is invalid (step S808).

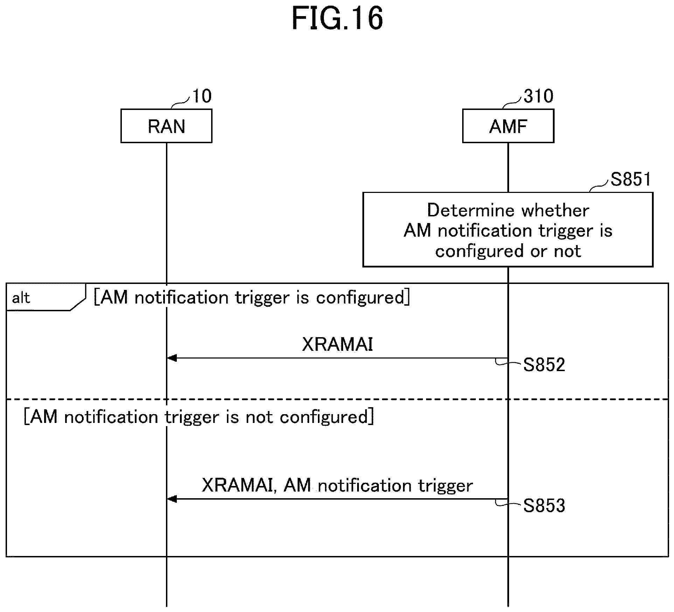

FIG. 16 is a second sequence diagram illustrating an example of a flow of a processing procedure of the scheme A at the time of configuring an XR media stream according to Example 2 of the embodiment of the present invention. The AMF 310 determines whether or not an AM notification trigger is configured (step S851).

When the AMF 310 determines that the AM notification trigger is configured, the AMF 310 transmits the XRAMAI to the RAN 10 (step S852). On the other hand, when the AMF 310 determines that the AM notification trigger is not configured, the AMF 310 transmits the XRAMAI to the RAN 10 and configures the AM notification trigger (AM assistance information feedback (CDRX change)) (step S853).

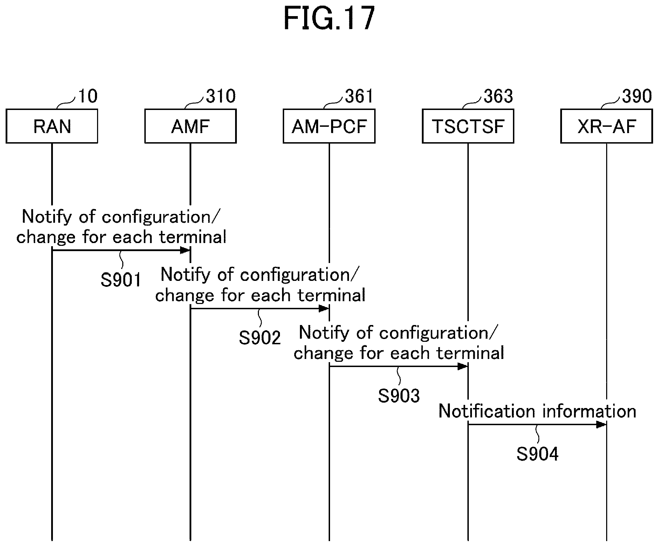

FIG. 17 is a sequence diagram illustrating an example of a flow of a processing procedure of the scheme A at the time of configuration/change for each terminal according to Example 2 of the embodiment of the present invention. When the RAN 10 performs configuration/change for each of terminals 20, the RAN 10 sends a notification to the AMF 310 according to configuration of the AM notification trigger (step S901). Note that, when the configuration of the AM notification trigger is "CDRX change", the RAN 10 notifies of the CDRX configuration contents when configuring/changing CDRX to the terminal 20.

The AMF 310 notifies the AM-PCF 361 of the notification contents (for example, CDRX configuration contents) based on the PCRT (step S902). The AM-PCF 361 forwards the notification to the TSCTSF 363 (step S903).

The TSCTSF 363 generates information to be notified to the XR-AF 390 based on the notification contents (for example, CDRX configuration contents), and transmits the information to the XR-AF 390 (step S904).

### (Flow of Processing Procedure of Scheme B)

As a premise of the scheme B, it is assumed that a power saving request is introduced into a route selection descriptor (RSD) of a UE route selection policy (URSP) rule, an information element included in a PDU session establishment request, and an information element included in SM subscriber information.

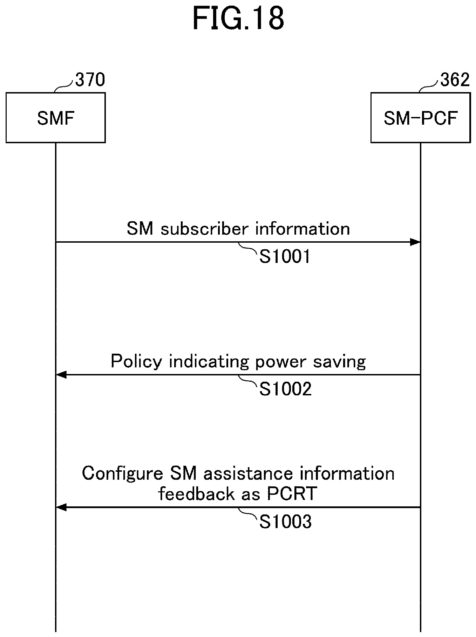

FIG. 18 is a sequence diagram illustrating an example of a flow of a processing procedure of the scheme B at the time of a PDU session establishment procedure according to Example 2 of the embodiment of the present invention. The SMF 370 notifies the SM subscriber information to the SM-PCF 362 (step S1001). The SM-PCF 362 notifies the SMF 370 of a policy indicating power saving (step S1002). In addition, the SM-PCF 362 configures the SM assistance information feedback as PCRT in the SMF 370 (step S1003).

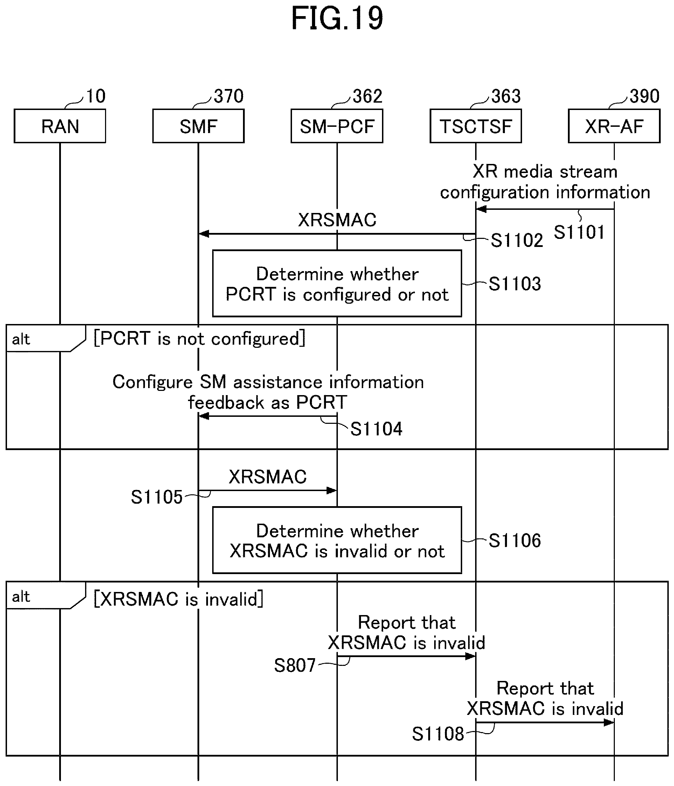

FIG. 19 is a first sequence diagram illustrating an example of a flow of a processing procedure of the scheme B at the time of configuring an XR media stream according to Example 2 of the embodiment of the present invention. The XR-AF 390 transmits information indicating the configuration of the XR media stream (step S1101). The TSCTSF 363 sends an XRSMAC to the SMF 370 (step S1102).

The SM-PCF 362 determines whether or not the PCRT is configured (step S1103). When the SM-PCF 362 determines that the PCRT is not configured, the SM-PCF 362 configures the SM assistance information feedback as the PCRT in the SMF 370 (step S1104).

The SMF 370 determines that the XRSMAC is one of the SM assistance information, and reports the XRSMAC to the SM-PCF 362 according to the PCRT (step S1105).

Since the XRSMAC is a container that is transparent to the SM-PCF 362, the SMF 370 needs to notify the SM-PCF362 of the contents as necessary. Therefore, the processing of step S1103 is required.

Subsequently, the SM-PCF 362 determines whether or not the XRSMAC is invalid (step S1106). Then, when SM-PCF 362 determines that the XRSMAC is invalid, the SM-PCF 362 notifies the TSCTSF 363 that the XRSMAC is invalid (step S1107). Then, the TSCTSF 363 notifies the XR-AF 390 that the XRSMAC is invalid (step S1108).

Note that, when related to QoS (for example, non-GBR PDB is not achieved), the conventional NotificationControl may be expanded instead of introducing the SM notification trigger.

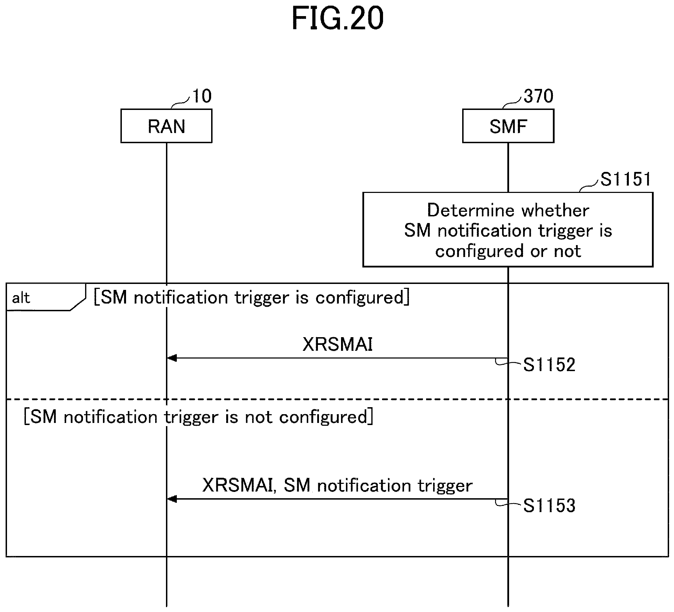

FIG. 20 is a second sequence diagram illustrating an example of a flow of a processing procedure of the scheme B at the time of configuring an XR media stream according to Example 2 of the embodiment of the present invention. The SMF 370 determines whether or not an SM notification trigger is configured (step S1151).

When the SMF 370 determines that the SM notification trigger is configured, the SMF 370 transmits an XRSMAI to the RAN 10 (step S1152). On the other hand, when the SMF 370 determines that the SM notification trigger is not configured, the SMF 370 transmits the XRSMAI to the RAN 10 and configures the SM notification trigger (SM assistance information feedback (SPS change, non-GBR PDB unachieved)) (step S1153).

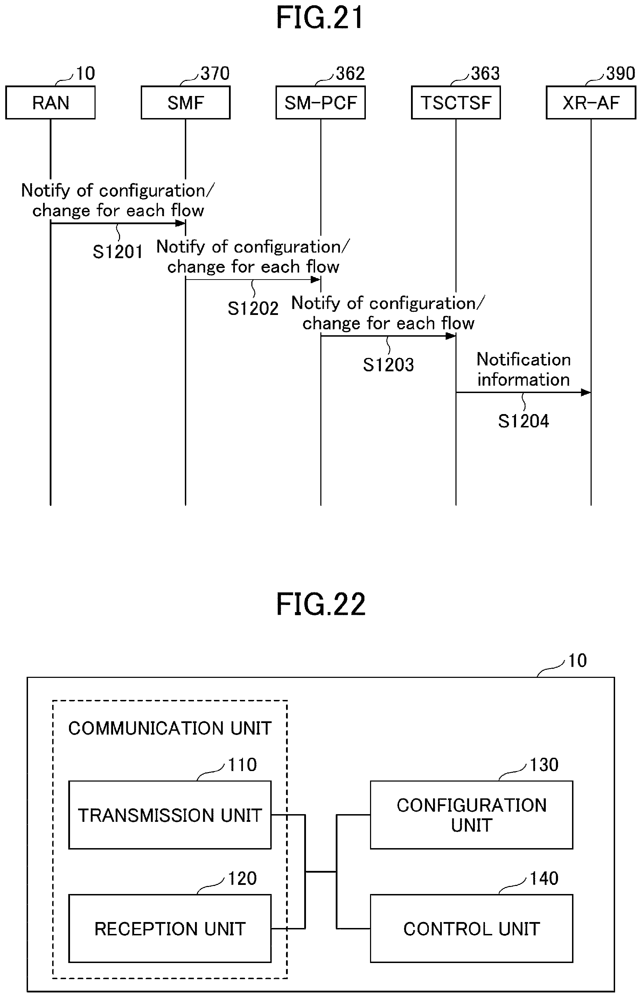

FIG. 21 is a sequence diagram illustrating an example of a flow of a processing procedure of the scheme B at the time of configuration/change for each flow according to Example 2 of the embodiment of the present invention. When the RAN 10 performs configuration/change for each flow in the terminal 20, the RAN 10 sends a notification to the SMF 370 in accordance with the configuration of the SM notification trigger (step S1201). Note that, in a case where the configuration of the SM notification trigger is "SPS change", the RAN 10 notifies of the SPS configuration content when configuring/changing the SPS in a data radio bearer (DRB) of the terminal 20.

The SMF 370 notifies the SM-PCF 362 of the notification contents (for example, SPS configuration contents) based on the PCRT (step S1202). The SM-PCF 362 transfers the notification contents to the TSCTSF 363 (step S1203).

The TSCTSF 363 generates information to be notified to the XR-AF 390 based on the notification contents (for example, SPS configuration contents), and transmits the information to the XR-AF 390 (step S1204).

### (Example of Notification Information in Scheme 1)

The TSCTSF 363 converts information as follows. The following shows the relationship between the CDRX configuration of the conversion source (right side) and the notification information after conversion (left side).

- Desired transmission cycle of I-frame: DRX long cycle
- Interval between desired I-frame transmission and immediately subsequent B/P frame transmission: DRX short cycle
- Number of B/P frames to be transmitted after one desired I-frame: DRX short cycle count
- Desired data size of I-frame divided by data transmission rate: DRX inactivity timer

The XR-AS 410 understands that the above **I-**frame condition is applicable to the trigger for sending the I-frame of each XR media stream or the bundled data size, when a plurality of XR media streams are transmitted. The same applies to B/P frames.

According to the present Example, the 5GS (core network 30) notifies the XR-AF 390/XR-AF 390, so that it is possible that the XR-AS 410 does not transmit unnecessary data.

### (Apparatus Configuration)

Next, functional configuration examples of the base station 10, the terminal 20, and various network nodes that perform the processes and operations described above will be described. The base station 10, the terminal 20, and various network nodes include functions for implementing the above-described embodiments. However, the base station 10, the terminal 20, and various network nodes may each include only some of the functions in the embodiments.

### <Base Station 10 and Network Node>

FIG. 22 is a diagram illustrating an example of a functional configuration of the base station 10. As illustrated in FIG. 22, the base station 10 includes a transmission unit 110, a reception unit 120, a configuration unit 130, and a control unit 140. The functional configuration shown in FIG. 22 is merely an example. The functional sections and the names of the functional units may be any as long as the operations according to the embodiment of the present invention can be performed. The network node may have the same functional configuration as the base station 10. Further, the network nodes having a plurality of different functions on the system architecture may be configured by a plurality of network nodes separated for each function.

The transmission unit 110 includes a function of generating a signal to be transmitted to the terminal 20 or another network node and transmitting the signal in a wired or wireless manner. The reception unit 120 includes a function of receiving various signals transmitted from the terminal 20 or another network node and acquiring, for example, information of a higher layer from the received signal.

The configuration unit 130 stores configuration information configured in advance and various kinds of configuration information to be transmitted to the terminal 20 in a storage apparatus, and reads the configuration information from the storage apparatus as necessary. The content of the configuration information is, for example, a configuration related to communication using NTN.

The control unit 140 performs processing related to communication using NTN as described in the embodiment. The control unit 140 performs processing related to communication with the terminal 20. The control unit 140 performs a process related to the verification of the geographical position of the terminal 20. The functional unit related to signal transmission in the control unit 140 may be included in the transmission unit 110, and the functional unit related to signal reception in the control unit 140 may be included in the reception unit 120.

### <Terminal 20>

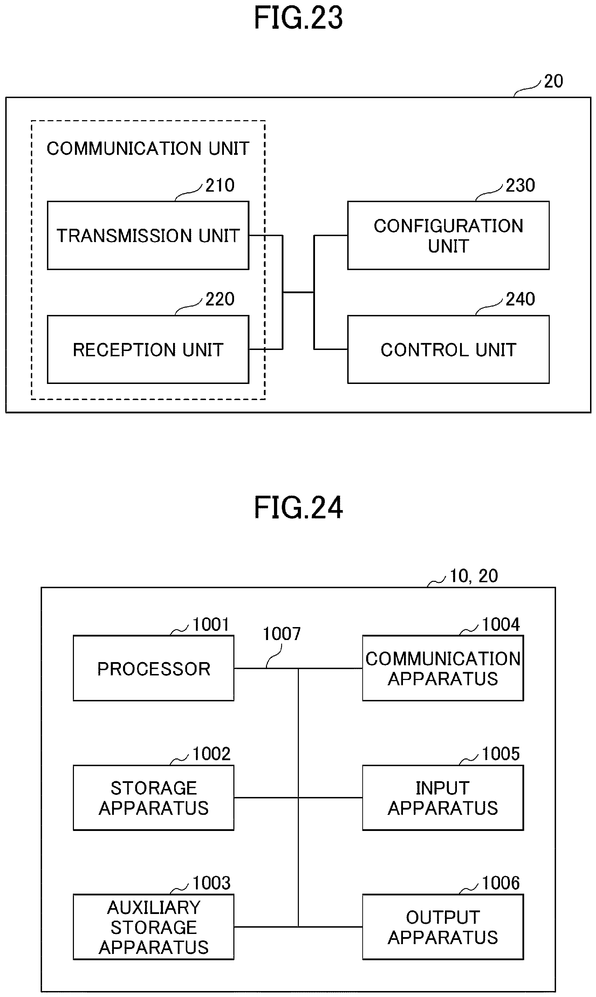

FIG. 23 is a diagram illustrating an example of a functional configuration of the terminal 20. As illustrated in FIG. 23, the terminal 20 includes a transmission unit 210, a reception unit 220, a configuration unit 230, and a control unit 240. The functional configuration shown in FIG. 10 is merely an example. The functional sections and the names of the functional units may be any as long as the operations according to the embodiment of the present invention can be performed. The USIM mounted on the terminal 20 may include the transmission unit 210, the reception unit 220, the configuration unit 230, and the control unit 240, similarly to the terminal 20.

The transmission unit 210 creates a transmission signal from the transmission data and transmits the transmission signal by radio. The reception unit 220 receives various signals by radio and acquires a signal of a higher layer from the received signal of the physical layer. Also, the reception unit 220 has a function of receiving NR-PSS, NR-SSS, NR-PBCH, DL/UL control signals or reference signals, and so on transmitted from a network node.

The configuration unit 230 stores various kinds of configuration information received from the network node by the receiving unit 220 in the storage apparatus, and reads the configuration information from the storage apparatus as necessary. The configuration unit 230 also stores configuration information configured in advance.

The network node or the base station of the present embodiment may be configured as a network node or a base station described in each of the following items. The following communication method may be implemented.

### <Configuration of Present Embodiment>

### (Item 1)

A network node including:
a reception unit configured to receive information indicating traffic characteristics of an XR media stream to be transmitted to a terminal; and
a transmission unit configured to transmit, to another network, information for assisting configuration of a discontinuous reception by a base station based on the information indicating the traffic characteristics.

### (Item 2)

The network node as described in item 1,
wherein the reception unit receives information indicating a cycle of the XR media stream measured by a network node that relays the XR media stream, and
the transmission unit transmits, to the other node, the information for assisting the configuration of the discontinuous reception by the base station based on the information indicating the cycle of the XR media stream.

### (Item 3)

The network node as described in item 1, wherein the transmission unit transmits, to the other network node, information indicating that the information indicating the cycle of the XR media stream is not included.

### (Item 4)

A base station including:
a reception unit configured to receive, from another network node, information for assisting configuration of a discontinuous reception function based on information indicating traffic characteristics of an XR media stream; and
a control unit configured to determine a configuration of the discontinuous reception function for each terminal or of semi-persistent scheduling for each flow for transmission and reception of the XR media stream based on the information for assisting configuration of the discontinuous reception function.

### (Item 5)

The base station as described in item 4, wherein the reception unit receives, from the other network node, information indicating that the information indicating the cycle of the XR media stream is not included, and
the control unit measures the cycle of the XR media stream based on the information indicating that the information indicating the cycle of the XR media stream is not included, and determines the configuration of the discontinuous reception function for each terminal or of semi-persistent scheduling for each flow for transmission and reception of the XR media stream based on the measurement result.

### (Item 6)

A communication method executed by a network node, the communication node including:
receiving information indicating traffic characteristics of an XR media stream to be transmitted to a terminal; and
transmitting, to another network, information for assisting configuration of a discontinuous reception by a base station based on the information indicating the traffic characteristics.

Any of the above configurations provides a technique that enables the realization of the discontinuous reception function adapted to the XR media in the radio communication system. According to item 1, it is possible to transmit the information for assisting the configuration of the discontinuous reception by the base station based on the information indicating the traffic characteristics. According to item 2, it is possible to transmit the information for assisting the configuration of the discontinuous reception by the base station based on the information indicating the cycle of the XR media stream. According to item 3, it is possible to transmit the information indicating that the information indicating the cycle of the XR media stream is not included. According to item 4, it is possible to determine the configuration of the discontinuous reception function for each terminal or of semi-persistent scheduling for each flow for transmission and reception of the XR media stream based on the information for assisting configuration of the discontinuous reception function. According to item 5, it is possible to measure the cycle of the XR media stream based on the information indicating that the information indicating the cycle of the XR media stream is not included, and to determine the configuration of the discontinuous reception function for each terminal or of semi-persistent scheduling for each flow for transmission and reception of the XR media stream based on the measurement result.

### (Hardware Configuration)

The block diagrams (FIGs. 22 and 23) used in the description of the embodiment described above illustrate the blocks of functional units. Such functional blocks (configuration parts) are attained by at least one selectable combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as a transmitting unit or a transmitter. As described above, the attainment method thereof is not particularly limited.

For example, the network node, the terminal 20, and the like in one embodiment of this disclosure may function as a computer for performing the processing of a radio communication method of this disclosure. FIG. 24 is a diagram illustrating an example of a hardware configuration of the base station 10 and the terminal 20 according to one embodiment of this disclosure. The network node may have a hardware configuration similar to that of the base station 10. The USIM may have the same hardware configuration as the terminal 20. The base station 10 and the terminal 20 described above may be physically configured as a computer apparatus including a processor 1001, a storage apparatus 1002, an auxiliary storage apparatus 1003, a communication apparatus 1004, an input apparatus 1005, an output apparatus 1006, a bus 1007, and the like.

Note that, in the following description, the word "apparatus" can be replaced with a circuit, a device, a unit, or the like. The hardware configuration of the base station 10 and the terminal 20 may be configured to include one or a plurality of apparatuses illustrated in the drawings, or may be configured not to include a part of the apparatuses.

Each function of the base station 10 and the terminal 20 is attained by reading predetermined software (a program) on hardware such as the processor 1001 and the storage 1002 such that the processor 1001 performs an operation, and by controlling the communication of the communication apparatus 1004 or by controlling at least one of reading and writing of data in the storage 1002 and the auxiliary storage 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage 1002 from at least one of the auxiliary storage 1003 and the communication apparatus 1004, and thus, executes various processing. A program for allowing a computer to execute at least a part of the operation described in the embodiment described above is used as the program. The control unit 140 of the base station 10 shown in FIG. 22 may be attained by a control program that is stored in the storage 1002 and is operated by the processor 1001. Also, for example, the control unit 240 of the terminal 20 shown in FIG. 23 may be attained by a control program that is stored in the storage 1002 and is operated by the processor 1001. It has been described that the various types of processing described above are executed by one processor 1001, but the various types of processing may be simultaneously or sequentially executed by two or more processors 1001. The processor 1001 may be mounted on one or more chips. Note that, the program may be transmitted from a network through an electric communication line.

The storage 1002 is a computer readable recording medium, and for example, may be configured of at least one of a read only memory (ROM), an erasable programmable ROM (EPROM), an electrically erasable programmable ROM (EEPROM), a random access memory (RAM), or the like. The storage 1002 may be referred to as a register, a cache, a main memory (a main storage unit), and the like. The storage 1002 is capable of retaining a program (a program code), a software module, and the like that can be executed in order to implement a communication method according to one embodiment of this disclosure.

The auxiliary storage 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disc), a smart card, a flash memory (for example, a card, a stick, a key drive), a floppy (Registered Trademark) disk, a magnetic strip, or the like. The storage medium described above, for example, may be a database including at least one of the storage device 1002 and the auxiliary storage device 1003, a server, or a suitable medium.

The communication apparatus 1004 is hardware (a transmitting and receiving device) for performing communication with respect to the computer through at least one of a wire network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication apparatus 1004. In the transmitting and receiving unit, the transmitting unit and the receiving unit may be mounted while being physically or logically separated.

The input apparatus 1005 is an input device for receiving input from the outside (for example, a keyboard, a mouse, a microphone, a switch, a button, a sensor, and the like). The output apparatus 1006 is an output device for implementing output with respect to the outside (for example, a display, a speaker, an LED lamp, and the like). Note that the input apparatus 1005 and the output apparatus 1006 may be integrally configured (for example, a touch panel).

In addition, each of the apparatuses such as the processor 1001 and the storage 1002 may be connected by the bus 1007 for performing communication with respect to information. The bus 1007 may be configured by using a single bus, or may be configured by using different buses for each of the apparatuses.

In addition, the base station 10 and the terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be implemented by using at least one piece of hardware.

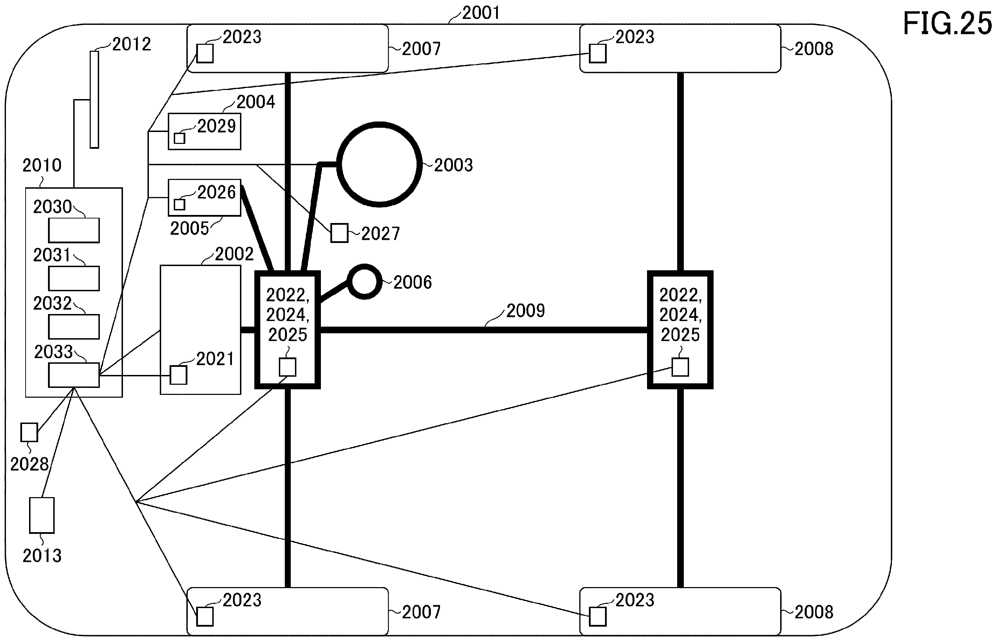

FIG. 25 shows a configuration example of a vehicle 2001 according to the present embodiment. As shown in FIG. 25, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. Each aspect/embodiment described in the present disclosure may be applied to a communication apparatus mounted on the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheels or the rear wheels, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic Control Unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, an accelerator pedal depression signal acquired by an accelerator pedal sensor 2029, a brake pedal depression signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

The information service unit 2012 may include an input device (for example, a keyboard, a mouse, a microphone, a switch, a button, a sensor, a touch panel, or the like) that receives an input from the outside, and may include an output device (for example, a display, a speaker, an LED lamp, a touch panel, or the like) that performs an output to the outside.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021-2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of signals from the various sensors 2021 to 2028 described above input to the electronic control unit 2010, information obtained based on the signals, or information based on input from the outside (user) obtained via the information service unit 2012 to an external device via radio communication. The electronic control unit 2010, the various sensors 2021 to 2028, the information service unit 2012, and the like may be referred to as an input unit that receives an input. For example, PUSCH transmitted by the communication module 2013 may include information based on the input.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (for example, outputs information to a device such as a display or a speaker based on PDSCH (or data/information decoded from the PDSCH) received by the communication module 2013).

In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station 10 and the terminal 20 have been described by using a functional block diagram, but such an apparatus may be attained by hardware, software, or a combination thereof. Each of software that is operated by a processor of the base station 10 according to the embodiment of the invention and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiment described in this disclosure may be applied to a system using long term evolution (LTE), LTE-advanced (LTE-A), SUPER 3G, IMT-advanced, a 4th generation mobile communication system (4G), a 5th generation mobile communication system (5G), a 6th generation mobile communication system (6G), an xth generation mobile communication system (xG) (x is an integer or a decimal for example), future radio access (FRA), new radio (NR), New radio access (NX), Future generation radio access (FX), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded, modified, created, or defined on the basis thereof. In addition, a combination of a plurality of systems (for example, a combination of 5G and at least one of LTE and LTE-A, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), and at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding piece of information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In the present disclosure, the transmission of information from the base station to the terminal may be read as the base station instructing the terminal to perform control and operation based on the information.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the base station and the mobile station may be referred to as a transmission device, a reception device, a communication device, or the like. At least one of the base station and the mobile station may be a device mounted on a mobile object, the mobile object itself, or the like. The mobile object is a movable object, and the moving speed is arbitrary. The moving object may be stopped. Examples of the moving object include, but are not limited to, vehicles, transportation vehicles, automobiles, motorcycles, bicycles, connected cars, excavators, bulldozers, wheel loaders, dump trucks, forklifts, trains, buses, rear cars, rickshaws, ships and other watercraft, airplanes, rockets, artificial satellites, drones, multicopters, quadcopters, balloons, and objects mounted thereon. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the terminal. For example, each aspect/embodiment of this disclosure may be applied to a configuration in which communication between the base station and the user terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the user terminal in this disclosure may be replaced with the base station. In this case, the function of the user terminal described above may be provided in the base station.

The terms "determining" used in this disclosure may involve diverse operations. "Determining", for example, may include deeming judging, calculating, computing, processing, deriving, investigating, looking up (search, inquiry) (for example, looking up in a table, a database, or another data structure), and ascertaining, as "determining". In addition, "determining" may include deeming receiving (for example, receiving information), transmitting (for example, transmitting information), input, output, and accessing (for example, accessing data in a memory), as "determining". In addition, "determining" may include deeming resolving, selecting, choosing, establishing, comparing, and the like as "determining". That is, "determining" may include deeming an operation as "determining". In addition, "determining" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as a pilot based on a standard to be applied.

The description "based on" that is used in this disclosure does not indicate only "based on only", unless otherwise specified. In other words, the description "based on" indicates both "based on only" and "based on at least".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or that the first element necessarily precedes the second element in any manner.

"Means" in the configuration of each of the apparatuses described above may be replaced with "unit", "circuit", "device", and the like.

In this disclosure, in a case where "include", "including", and modifications thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time units greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time units at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, a unit representing TTI may be referred to as a slot, a mini slot, and the like, but not a subframe.

Here, TTI, for example, indicates a minimum time unit of scheduling in radio communication. For example, in an LTE system, the base station performs scheduling for allocating a radio resource (a frequency bandwidth, transmission power, and the like that can be used in each of the terminals 20) in TTI units, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined based on the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that one or a plurality of RBs may be referred to as a physical resource block (physical RB: PRB), a sub-carrier group (SCG), a resource element group (REG), a PRB pair, an RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In the terminal 20, one or a plurality of BWPs may be configured within one carrier.

At least one of the configured BWPs may be active, and it need not be assumed that the terminal 20 transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as "a", "an", and "the" are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure.

### Description of Symbols

- 10: base station (RAN)
- 110: transmission unit
- 120: reception unit
- 130: configuration unit
- 140: control unit
- 20: terminal
- 30: core network
- 40: DN
- 210: transmission unit
- 220: reception unit
- 230: configuration unit
- 240: control unit
- 310: AMF
- 320: UDM
- 330: NEF
- 340: NRF
- 350: AUSF
- 361: AM-PCF
- 362: SM-PCF
- 363: TSCTSF
- 370: SMF
- 380: UPF
- 390: XR-AF
- 410: XR-AS
- 1001: processor
- 1002: storage
- 1003: auxiliary storage
- 1004: communication apparatus
- 1005: input apparatus
- 1006: output apparatus
- 2001: vehicle
- 2002: drive unit
- 2003: steering unit
- 2004: accelerator pedal
- 2005: brake pedal
- 2006: shift lever
- 2007: front wheels
- 2008: rear wheels
- 2009: axle
- 2010: electronic control unit
- 2012: information service unit
- 2013: communication module
- 2021: current sensor
- 2022: revolution sensor
- 2023: pneumatic sensor
- 2024: vehicle speed sensor
- 2025: acceleration sensor
- 2026: brake pedal sensor
- 2027: shift lever sensor
- 2028: object detection sensor
- 2029: accelerator pedal sensor
- 2030: driving support system unit
- 2031: microprocessor
- 2032: memory (ROM**,** RAM)
- 2033: communication port (IO port)

## Claims

1. A network node comprising:
a reception unit configured to receive information indicating traffic characteristics of an XR media stream to be transmitted to a terminal; and
a transmission unit configured to transmit, to another network node, information for assisting configuration of a discontinuous reception by a base station based on the information indicating the traffic characteristics.

2. The network node as claimed in claim 1,
wherein the reception unit receives information indicating a cycle of the XR media stream measured by a network node that relays the XR media stream, and
the transmission unit transmits, to the other network node, the information for assisting the configuration of the discontinuous reception by the base station based on the information indicating the cycle of the XR media stream.

3. The network node as claimed in claim 1, wherein the transmission unit transmits, to the other network node, information indicating that the information indicating the cycle of the XR media stream is not included.

4. A base station comprising:
a reception unit configured to receive, from another network node, information for assisting configuration of a discontinuous reception function based on information indicating traffic characteristics of an XR media stream; and
a control unit configured to determine a configuration of the discontinuous reception function for each terminal or of semi-persistent scheduling for each flow for transmission and reception of the XR media stream based on the information for assisting configuration of the discontinuous reception function.

5. The base station as claimed in claim 4, wherein the reception unit receives, from the other network node, information indicating that the information indicating a cycle of the XR media stream is not included, and
the control unit measures the cycle of the XR media stream based on the information indicating that the information indicating the cycle of the XR media stream is not included, and determines the configuration of the discontinuous reception function for each terminal or of semi-persistent scheduling for each flow for transmission and reception of the XR media stream based on the measurement result.

6. A communication method executed by a network node, the communication node comprising:
receiving information indicating traffic characteristics of an XR media stream to be transmitted to a terminal; and
transmitting, to another network node, information for assisting configuration of a discontinuous reception by a base station based on the information indicating the traffic characteristics.
